# EUROPEAN PATENT APPLICATION

(11) **EP 0 990 976 A2**
(43) Date of publication of application: **05.04.2000**
(21) Application number: 99105525.2
(22) Date of filing: 18.03.1999
(51) Int. Cl.: G06F 1/16

(54) **Portable computer**

(30) Priority: 11.09.1998 JP 25802198
(71) Applicant: MITSUBISHI DENKI KABUSHIKI KAISHA, Tokyo 100-8310 (JP)
(72) Inventor: Yamashita, Kazuaki, Chiyoda-ku, Tokyo 100-8310 (JP)
(74) Representative: Pfenning, Meinig & Partner

(57) **Abstract**

A binder type information data terminal has an appearance of a binder and does not look like an information data terminal. Among devices constituting the information data terminal which have been prepared individually, a main device (4) is provided on the end paper portion (14) of the notebook body (1), while a display device (5) is provided on the end paper portion (15). The main device and the display device are integrally formed with a cover using leather. A keyboard (9), which is made in the form of an input binder leaf (10), is held onto the body via binding rings (3). A Krause chain (13) is engaged with hooks (12) provided on each end paper portion (14, 15), so that the display screen (7) can be set to an optimal position.

## Description

### BACKGROUND OF THE INVENTION

### 1. Field of the Invention

The present invention relates to an information data terminal and, more particularly, to a portable information data terminal.

### 2. Description of Related Art

With the development of "mobile computing", a variety of compact information data terminals that are easy to carry and have multiple functions (hereinafter referred to as "portable terminals") have become available on the consumer market. In order to differentiate such products from similar products marketed by competitor companies and ensure that they will be chosen by consumers from among all the portable terminals on the market, it is necessary for the manufacturer to stimulate consumers, not only by drawing attention to the function of the apparatus, but also by manufacturing products with an attractive appearance.

In the prior art, although it has always been attempted to make such apparatuses as aesthetically pleasing as possible, there has been no apparatus available on the market provided with additional value by combining the functions of other item that does not have the appearance of a data processing terminal itself. Many users may heavily weigh the appearance of a portable terminal because they intend to operate the apparatus in public. Some users may want an apparatus which does not look like an actual portable terminal.

For example, many of the same workers and students who carry a portable terminal may also use a binder-type portable filing system (such as the "Filofax (trademark)" brand system) to which various refilling materials can be interchangeably introduced. Now, as there are no portable terminals integrally toned with such a filing system, people who wish to use both a portable terminal and a filing system must carry two seperate units.

### SUMMARY OF THE INVENTION

The present invention was made to overcome the foregoing problems and it is an object of the present invention to provide a binder type information data terminal having an appearance similar to a binder, and not look like an information data terminal.

In view of the above-mentioned object, according to one aspect of the present invention, there is provided a binder type information data terminal comprising : an information data terminal including a main device in the form of a plate, having a processor, a display device in the form of a plate, having a display screen, and an input device for data input; and a binder body constituting a binder. This information data terminal realizes the appearance of a binder by housing said main device, said display device, and said input device, which have been prepared individually, in said binder body.

According to another aspect of the present invention, at least one of said main device and said display device is provided on the end paper portion of said binder body so as to be integrally formed with a cover.

According to a further aspect, said input device is a keyboard formed as an input binder leaf having a leaf shape with filing holes, and is filed in the binder body via filing rings.

According to a still further aspect, the information data terminal further comprises a display device setting mechanism for setting the display screen of the display device at an optimal angle by angularly holding the opened cover.

According to a still further aspect, the display device setting mechanism further includes an adjusting mechanism for adjusting the set angle of the display device.

According to a still further aspect, the display device setting mechanism has a leg provided at the display device side on the cover to be opened when the apparatus is used and an aperture provided at the main device side which forms a base body when the apparatus is used, said leg being inserted into said aperture for holding said display device.

According to a still further aspect, a hinge is further provided for pivotably mounting said leg to said display device.

According to a still further aspect, a binder leaf for containing accessories of said information data terminal is further provided.

According to a further aspect, at least one of said main device or the input device is formed as a binder leaf having a leaf shape with filing holes, and is filed in the binder body via filing rings.

According to a further aspect, at least one of the main device and the display device is provided with a mounting member to be detachably mounted onto the end paper portion of said binder body.

According to a still further aspect, a substrate on which a processor or the like is mounted is removably housed in said main device.

According to another aspect, the rear member forming the rear part of the binder is detachably fixed to at least one of the cover faces of the binder, and connection to the terminals of said main device is enabled when the rear member is detached from said cover face and opened.

As described, the information data terminal having an appearance of a binder of the present invention enhances the motivation to buy in consumers who heavily weigh the appearance of the item, and also provides users of an information data terminal with additional value of a binder. Therefore, people carrying both a binder and an information data terminal can now carry just the binder type information data terminal of this invention, which is less bulky than existing solutions.

Further, any of the leaf shape devices constituting the information data terminal can be removed from the binder body when they are used.

The display screen of the information data terminal can be set to an optimal angle by the display device setting mechanism.

Further, since the setting angle of the display device can be adjusted, it is possible to set the display screen at an optimal angle for each user.

Still further, it is possible to house the accessories of the terminal in an accessory containing binder leaf which can be filed to the terminal body and can be carried therewith.

Since the main device or the display device can be detachably mounted to the binder body and the substrate including a processor or the like can be also detachably mounted on each device, it is possible to treat the breakdown or upgrading of the substrate or the like mounted on each device with ease.

Still further, since the rear member can be detached from the cover face and opened, connection is made easily to the terminals of the main device provided at positions corresponding to the rear member.

### BRIEF DESCRIPTION OF THE DRAWINGS

These and other objects and features of the present invention will be explained in the description below, with reference to the accompanying drawings, in which:
Fig. 1 is a perspective view showing the appearance of a notebook organizer type information data terminal according to a first embodiment of the present invention;
Fig. 2 is a perspective view of the appearance of the information data terminal shown in Fig. 1 in use;
Fig. 3 is a view illustrating a binder leaf for containing accessories used in the first embodiment;
Fig. 4 is a perspective view illustrating an opened information data terminal according to a second embodiment of the present invention;
Fig. 5 is a view illustrating the appearance of an information data terminal according to a third embodiment of the present invention when in use;
Fig. 6 is a view illustrating the appearance of an information data terminal according to a fourth embodiment of the present invention when in use;
Fig. 7 is a rear view illustrating an information data terminal according to a fifth embodiment of the present invention when in use;
Fig. 8 is a view illustrating the appearance of a notebook organizer type information data terminal according to a sixth embodiment of the present invention;
Fig. 9 is a perspective view illustrating the appearance of the information data terminal shown in Fig. 8 when in use;
Fig. 10 is an exploded perspective view of a notebook organizer type information data terminal of the sixth embodiment;
Fig. 11 is a perspective view of the notebook organizer type information data terminal shown in Fig. 8 when seen from the back side.
Fig. 12 is a perspective view of the apparatus as shown in Fig. 11 when the back cover is turned open.
Fig. 13 is a view showing the arrangement of the hinged parts constituting a display setting mechanism in the sixth embodiment.
Fig. 14 is a view for explaining the method for setting the display in the sixth embodiment.

### DETAILED DESCRIPTION OF THE PREFERRED EMBODIMENTS

Preferred embodiments of the present invention will be described in further detail with reference to the accompanying drawings.

### Embodiment 1

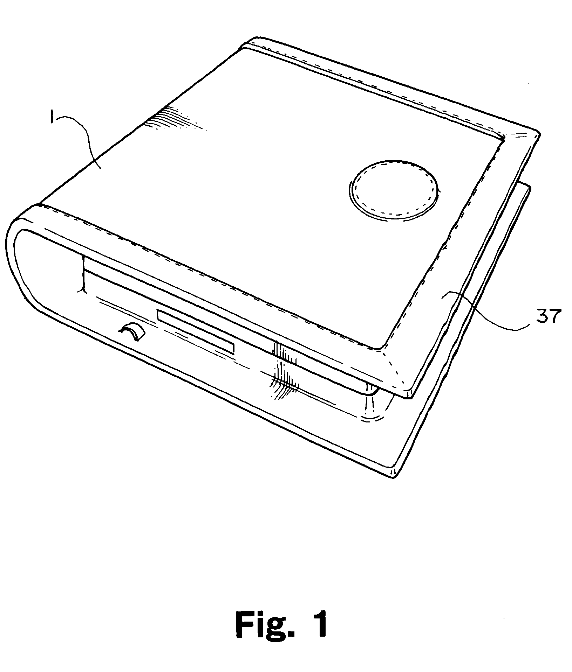

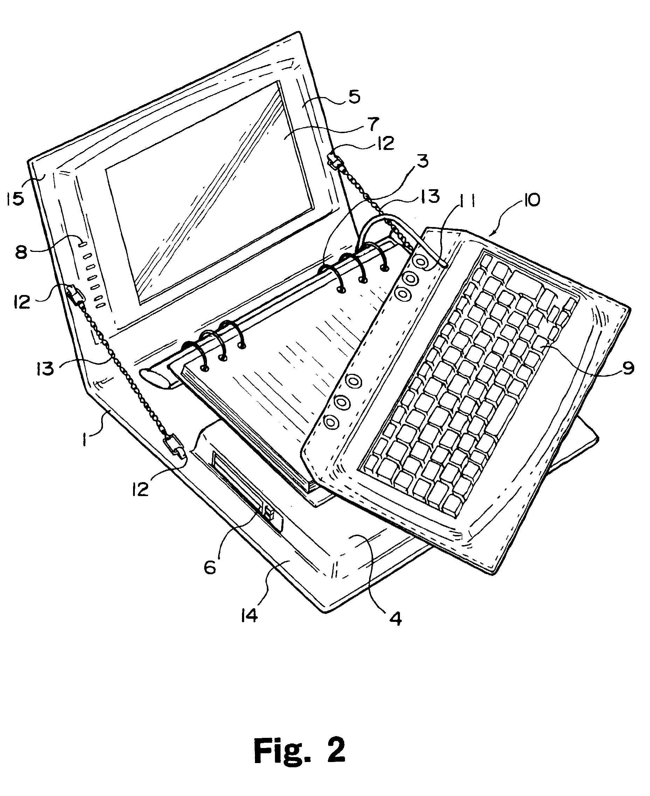

Fig. 1 is a perspective view illustrating the appearance of a portable loose-leaf filing system (hereinafter referred to as a "notebook organizer" or just "organizer" or "notebook") type information data terminal, which is one embodiment of the binder type information data terminal according to the present invention. Fig. 2 is a perspective view showing the appearance of the apparatus of Fig. 1 when in use. In this embodiment, as shown in these drawings, the apparatus of the present invention is applied to a notebook organizer, which is one form of a binder. The main part of the notebook organizer type information data terminal comprises a notebook body 1 which forms a notebook organizer, and an information data terminal body. The main part of the notebook body 1 comprises a substrate forming the covers of a notebook, a rear portion of the notebook, and leather covering the substrate. In this embodiment, a sheet of metal is used as the substrate, and a shock absorbing material, such as sponge, is provided between the metal and the leather. As in a normal notebook organizer, binding rings 3 are provided inside the notebook body 1 for detachably holding six-hole binder leaves. In the following description, the terms "information data terminal" or "notebook organizer" are used to describe a complete notebook organizer type information data terminal, while the term "information data apparatus" refers to the information data terminal body excluding the notebook body 1, and designates an apparatus within an information data terminal.

Generally, an information data apparatus comprises a main device containing a processor, a display device with a screen, and an input device used for data input. In this embodiment, these devices which have been individually prepared are contained in the notebook body 1 to constitute a notebook organizer type information data terminal. In other words, this embodiment is not merely a combination of an information data apparatus and a conventional notebook organizer, but is characterized in that a separate main device 4 is provided on the end paper portion 14 of the front cover (i.e. the back side of the cover) in the notebook body 1 so that the main device 4 is integrally formed with the front cover of the body 1 with the aid of the leather, while a separate display device 5 is provided on the end paper 15 of the back cover so as to be integrally formed with the back cover by the leather. In this case, connectors for external devices and terminals provided on the main device 4, a PC card slot 6, a display screen 7 of the display device 5, and indicators 8 are not covered by the leather so that appropriate connection, operation, display or the like can be executed. A cable for connecting the main device 4 with the display device 5 is provided between the base plate and the leather covering the inner side of the body 1. This embodiment is also characterized in that a keyboard 9, which is an input device, is provided in the form of a leaf so as to constitute an input binder leaf 10. More specifically, the keyboard 9 and a leaf shape substrate are integrally formed into the input binder leaf 10, which has binding holes 11 along one side. Thus, the keyboard 9 is detachably provided with respect to the notebook body 1. For each of the devices 4, 5 and 9, any devices to be installed in conventional portable terminals (mobile computers), which are sufficiently compact and thin, can be used without any modification. Thus, the notebook can be made to conform to multiple sizes, for example, A5, B5, or A4.

Further, the information data terminal of this embodiment comprises a display device setting mechanism for holding the cover including the display device 5 at an appropriate angle when the cover is opened, so that the screen 7 is easy to see when the apparatus is being used. Specifically, the respective end paper portions 14, 15 of the notebook body 1 have hooks 12 at the opposing positions around top and bottom. By engaging a Krause chain 13 with the hooks 12, the cover including the display device 5 can be held with a fixed angle. Rings forming a chain part of the Krause chain can be added or removed and the angle for setting the display device 5 can be regulated by thus changing the chain length. The Krause chain 13 can be contained in the notebook body 1 or in a pocket (not shown) provided in a binder leaf prepared for holding the piece, for being carried with the notebook.

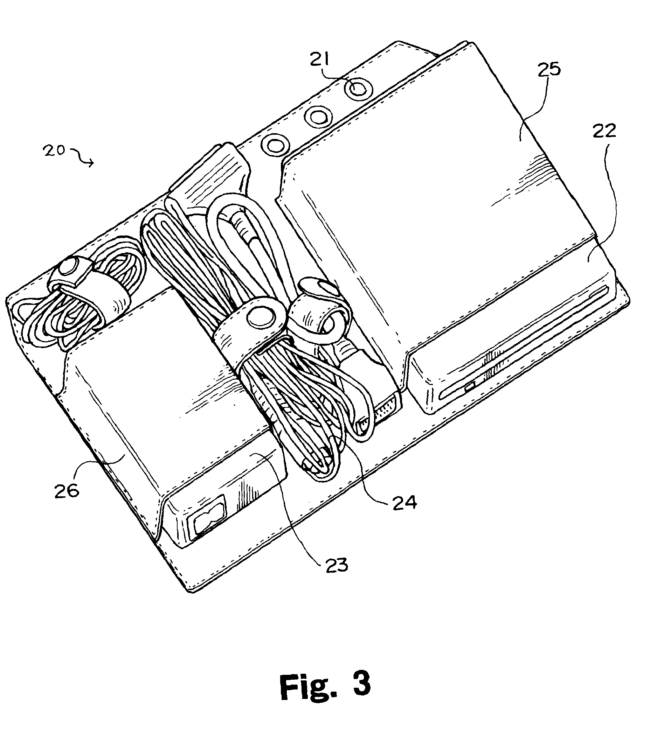

Fig. 3 illustrates a binder leaf for containing accessories used in this embodiment. This binder leaf 20 containing accessories, which has binding holes 21 as in the input binder leaf 10, can be filed in the notebook for ease of carrying. The accessory containing binder leaf 20 shown in Fig. 3 can contain a floppy disk (FD) drive 22, an AC adapter 23, and various kinds of cables 24, each of which is held by leather. Since the FD drive 22 can be operated while contained in the binder leaf 20, it is held relatively tight by the leather band 25 so as to surely prevent falling out while being carried. On the other hand, the AC adapter 23, which is usually used after being removed from the binder leaf 20, is held relatively loose by the leather band 25 so that it can be easily removed. Therefore, though not shown in the drawing, a mechanism such as a belt for preventing falling out may be further provided. Further, this binder leaf 20 may include a pocket for containing the above-mentioned Krause chain 13. The accessories to be carried with the notebook in the binder leaf 20 are not limited to those mentioned above. The accessories mentioned here include any devices constituting the information data apparatus except for the above-mentioned main device 4, the display device 5 and the keyboard 9, and accessories for the information data apparatus, as well as any items including the Krause chain 13 that are not directly related to the operation of the apparatus. Further, more than one binder leaf 20 may be prepared and filed for containing the accessories.

The process for using the information data apparatus will now be described. First, the information data terminal which has been carried in the state shown in Fig. 1 is opened as shown in Fig. 2. The Krause chains 13 carried with the terminal are then attached to each hook 12 so as to make the cover including the display device 5 stand at an appropriate angle. Next, the AC adapter 23 and PS/2 interface mini DIN 6 pins of the keyboard 9 are connected to respective connectors provided in the main device 4 at the side of the binding rings 3. Since, in this embodiment, the keyboard 9 can be removed from the notebook when it is used, it is possible to input data from thus removed input binder leaf 10 while viewing the contents written on a loose-leaf which has been also removed from the notebook. Alternatively, instead of removing the input binder leaf 10 from the binding rings 3, the keyboard 9 may be placed and used on the main device 4 having a flat surface.

In this embodiment, by providing an information terminal combined with a notebook organizer and thus having an appearance of the notebook organizer, it is possible to increase the buying desire of consumers whose motivation to buy largely relies upon the decorativeness of the apparatus. In particular, a wider range of decorative treatments can be applied to such type of an apparatus compared to when applying directly to the apparatus body itself. Further, users carrying a binder notebook together with an information data terminal now need only carry the binder type information data terminal of this embodiment by itself.

In this embodiment, as in a general information data apparatus, the connectors of the main device 4 are provided at the rear side of the main device 4, that is at the surface opposing to the rear part of the notebook, because of consideration for the appearance and the need to prevent incoming dust. However, the connectors may also be provided at the edge side so as to facilitate the connection.

### Embodiment 2

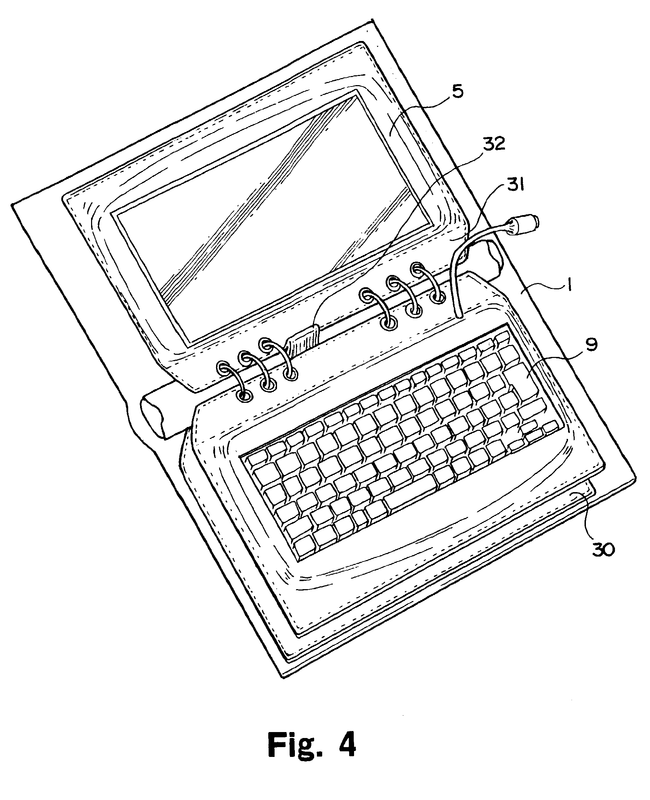

Fig. 4 is a perspective view illustrating an information data terminal of a second embodiment of the present invention when it is opened. Although only the keyboard 9 is formed into a leaf in Embodiment 1, in the present embodiment, the main device and the display device 5 are also made into leaves to form a main device binder leaf 30 and a display binder leaf 31, respectively, as shown in Fig. 4. This arrangement enables the main device 4 and the display device 5 to be detached from the notebook body 1 when they are used. Since the display device 5 can be thus detached, the display device setting mechanism for holding the cover with an appropriate angle is excluded from the structure. However, this setting mechanism may remain in the structure taking consideration of the case where the display binder leaf is used while being held by the binding rings. It is to be appreciated that an additional flat cable 32 is necessary to connect the main device 4 and the display device 5 which are made into leaves.

As described, by forming any of the devices 4, 5, and 9 as a leaf shape, it is possible to select the usage of the information data apparatus as desired.

### Embodiment 3

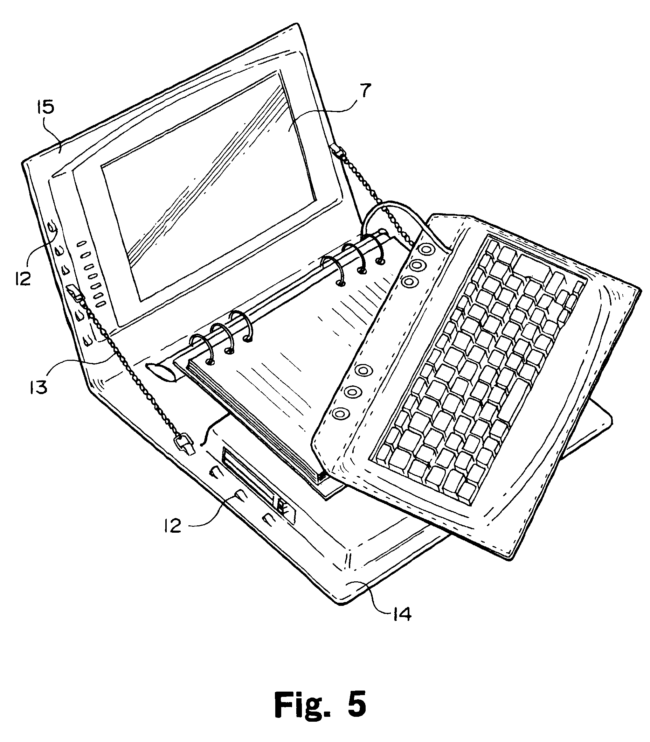

Fig. 5 is a perspective view illustrating the appearance of an information data terminal of a third embodiment of the present invention when it is used. Embodiments 3, 4 and 5, which will be described hereinafter, relate especially to exemplified structures of the display device setting mechanism for adjusting the display screen 7 to be positioned at an optimal angle.

In this embodiment, as shown in Fig. 5, the number of hooks 12 provided on each end paper portion is increased so that the angle at which the opened cover inclines can be regulated. This arrangement enables much easier angle adjustment than that in the embodiment 1 where the number of rings in the chain part of the Krause chain 13 is adjusted.

### Embodiment 4

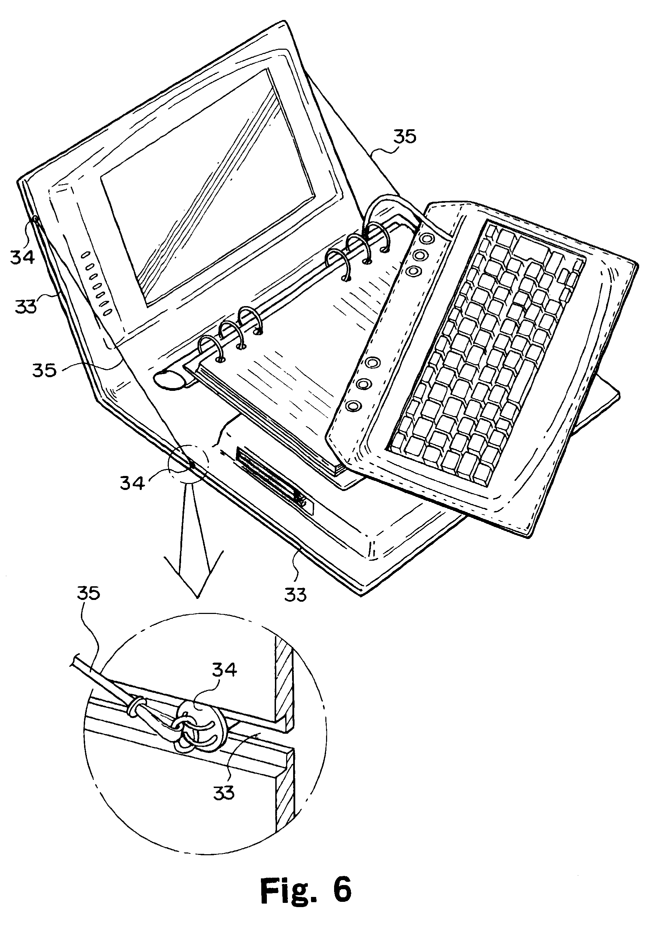

Fig. 6 is a perspective view showing the appearance of an information data terminal of a fourth embodiment of the present invention when it is being used. The display device setting mechanism in this embodiment comprises a pair of rails 33 provided along the thickness of each cover, sliders 34 which are slidable along each rail 33 but are locked so as not to slide when released, and a pair of laces 35 for coupling the sliders 34 provided at each cover. With this arrangement, under the normal condition, the sliders 34 are spring biased toward the center of the notebook body 1, when cogs in the slider 34 engages with cogs in the rail 33 for locking. When these cogs are disengaged by pulling the sliders 34, the sliders 34 can slide along the rail 33. According to this arrangement, it is possible to fix a desired setting angle of the display device.

### Embodiment 5

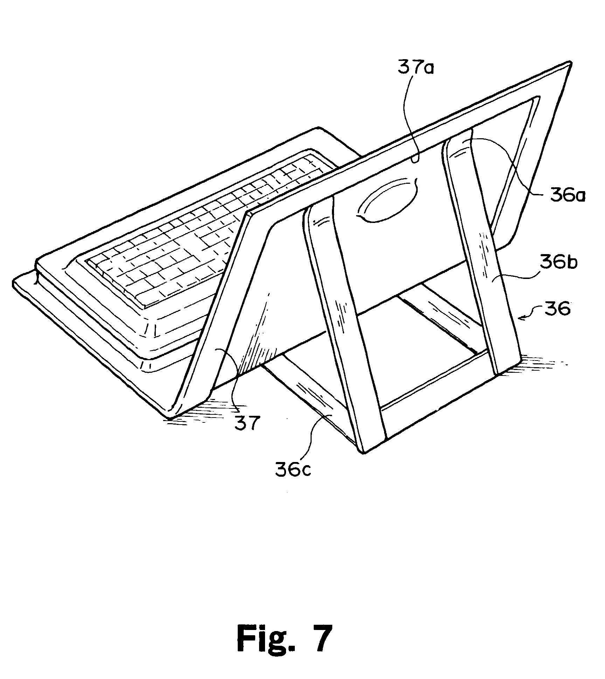

Fig. 7 is a perspective view illustrating the appearance of an information data terminal according to a fifth embodiment of this invention seen from the back when it is in use. In each of the foregoing embodiments, in order to hold the display screen at an optimal angle, the Krause chain or the like is constructed so that the cover including the display device can not be opened in excess of a predetermined angle. In this embodiment, the display screen is held at an optimal angle by supporting the cover carrying the display device from its back side (from the top surface of the cover). More specifically, this embodiment is characterized by providing a separate stand 36 as a display device setting mechanism. The stand 36 includes a support portion 36a which abuts with the cover face of the notebook, an arm part 36b which is flat and does not bend, and a leg part 36c. The leather 37 is overlappingly applied to the rim of the notebook in this embodiment taking wearability and decorativeness into consideration, and the stand 36 supports the cover from the back such that the support portion 36a engages with the edge 37a of the leather 37. As the notebook rests on the leg part 36c, the sliding movement of the stand 36 is prevented. The stand 36, which is foldable, can be housed in the notebook and carried therewith.

### Embodiment 6

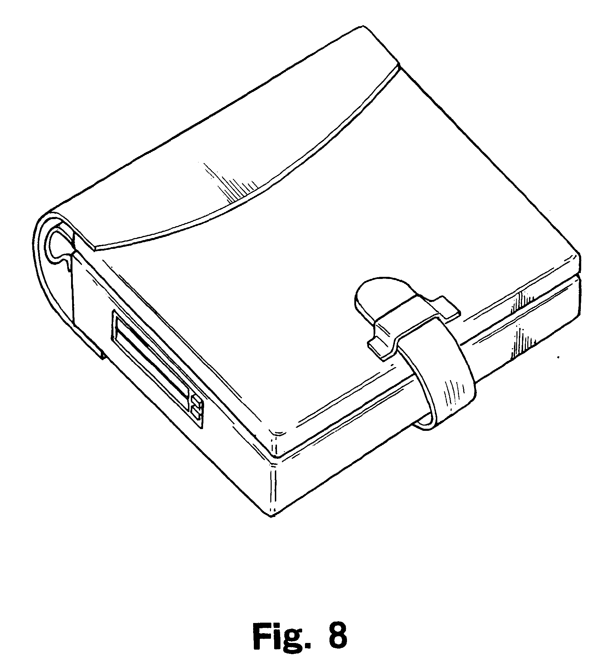

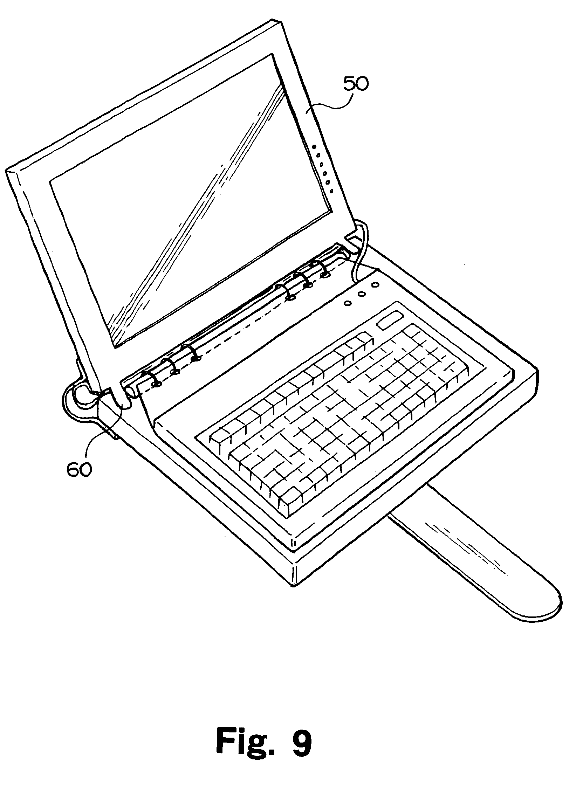

Fig. 8 is a perspective view illustrating the appearance of a notebook organizer type information data terminal of a sixth embodiment of the present invention, and Fig. 9 shows the appearance of the terminal of Fig. 8 when it is in use. The form of a notebook organizer of this embodiment is different from those in the foregoing embodiments. Compared with the embodiment 1, for example, the structure for mounting the main and display devices, the structure of the rear part of the notebook body, and the structure of the display device setting mechanism for holding the display screen at an appropriate angle all differ.

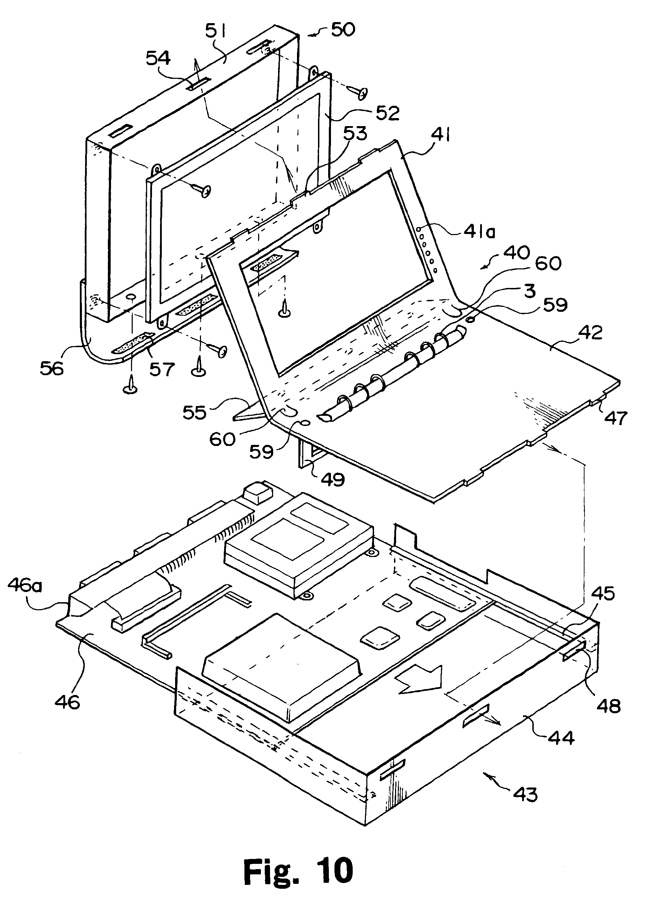

In this embodiment, the main device and the display device are not formed into leaves, but are absolutely integrated into the notebook organizer body, so that the surfaces of the main device and the display device respectively form the cover faces of the notebook organizer, and a rear member is provided over the cover faces. Fig. 10 is an exploded perspective view of the notebook organizer type information data terminal of this embodiment. The structure of the apparatus will be described hereinafter with reference of Fig. 10.

In this embodiment, the notebook body 40, which constitutes only the inner part of the notebook organizer, forms a basic body on which the main device and the display device are mounted. Each end paper portion 41, 42 comprises a sheet of metal, with a leather material applied thereto. In particular, the end paper portion 41 is formed into a frame for mounting a screen, on which holes 41a for indicators are provided. Further, a binding mechanism for binder leaves which has binding rings 3 is mounted in the vicinity of the rear part of the sheet of metal forming the end paper portion 42.

The main part of the main device 43 of this embodiment comprises a main device casing 44 and a module substrate 46 which has a processor and so on mounted thereon and is inserted into the casing 44 along guide rails 45 having an U-shaped profile and provided inside of the side faces of the casing 44. Leather is applied to the bottom and side surfaces of the casing 44. The main device casing 44 on which the module substrate 46 is mounted is fixed to the notebook body 40 such that the stoppers 47 located at the edge of the end paper portion 42 are inserted in the respective openings 48 in the casing 44 while the casing 44 is screwed to the mounting plate 49 attached to the body 40. The mounting plate 49 has a frame form whose opening is occupied with a connector wiring surface 46a including connector terminals of the module substrate 46. By this arrangement, the inside of the main device casing 44 is shielded by the mounting plate 49 and the end paper portion 42. In this embodiment, the bottom surface of the main device 43 forms a face of the back cover of the notebook organizer.

On the other hand, the main part of the display device 50 comprises a display device casing 51 and an LCD 52 fixed to the casing 51 with screws. A leather material is affixed to the back and side faces of the casing 51. The display device casing 51 has openings 54 with which stopper 53 formed at the edge of the end paper portion 41 is engaged. The casing 51 is fixed to the notebook body 40 by being screwed to the mounting plate 55. The mounting plate 55 has an opening through which a flat cable is provided for connecting the display device 50 and the main device 43. The connecting terminals of the display device 50 are positioned at this aperture region when fixed. In this manner, the interior of the display device casing 51 is shield by the mounting plate 55 and the end page portion 41. In this embodiment, the back surface of the display device 50 forms a face of the top cover of the notebook.

The notebook organizer thus formed in this embodiment is characterized in that the casings 44 and 51 for each device 43 and 50 are detachably mounted to the main body 40 with the mounting members, that is, screws. Accordingly, unlike the case of Embodiment 1 where the main and display devices are integrally formed with the notebook body using the leather, it its easy to remove each of the devices 43 and 50 from the notebook body. In this embodiment, the LCD 52 and the module substrate 46 are also detachably mounted to the casings 44 and 51, respectively. Accordingly, when the LCD 52, the processor or the like are broken or need upgrading, for example, the casings 44 and 51 can be detached from the main body 40 by removing the screws coupling the casings and the body. As described, the arrangement of this embodiment permits a module exchange which has been impossible with general data terminals, thereby flexibly responding to breakdown or upgrading of the LCD 52 or the like.

This embodiment is further characterized by the arrangement of the rear portion of the notebook body, which is described below with reference to Figs. 10, 11 and 12.

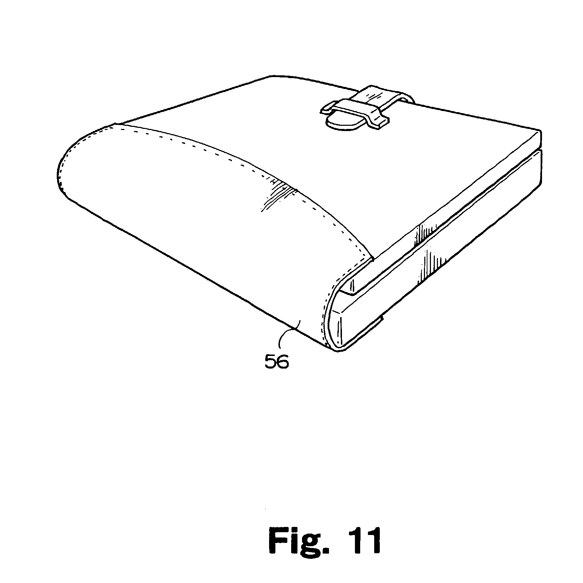

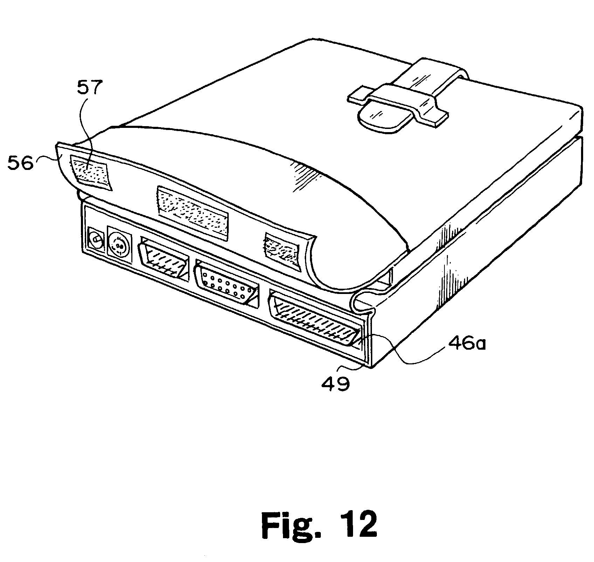

Fig. 11 is a perspective view of the notebook organizer type information data terminal of Fig. 8 when seen from the rear side. Fig. 12 is another perspective view of the terminal of Fig. 11 with the rear member being turned open from the back cover. The rear member 56, which is a part of the notebook body and forms the rear portion of the notebook, is made from leather and is sewed to the leather portion covering the display device 50. At the same time, the rear member 56 is detachably fixed to the cover face of the main device 43 by Velcro (trademark) provided on the rear member 56 and the cover face of the main device 43. With the rear part of the notebook thus configured, it is possible to connect the AC adapter, a mouse or the like to the connectors easily. This is advantageous over Embodiment 1 in which the use of an infrared communication board or the size of the connectors for cables may be limited because of the filing rings located opposing to the rear surface of the main device where the connectors are provided. It is necessary, however, to uncover the rear member 56 and connect the main device and the display device via a flat cable when using the apparatus of this embodiment. The rear member 56, which is detachable to the back cover (the cover face formed by the main device 43), may be detachable to the top cover (the face formed by the display device 50) or to the both covers.

Finally, description will be provided as to the display device setting mechanism for setting the display screen at an optimal angle, which is a feature of this embodiment.

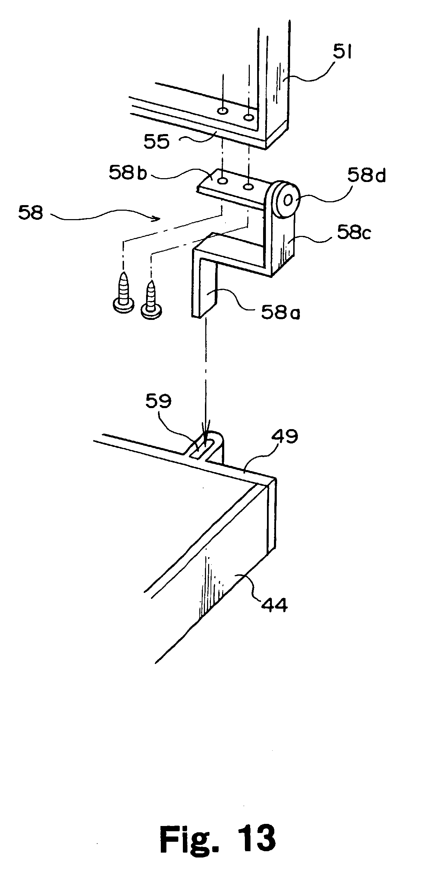

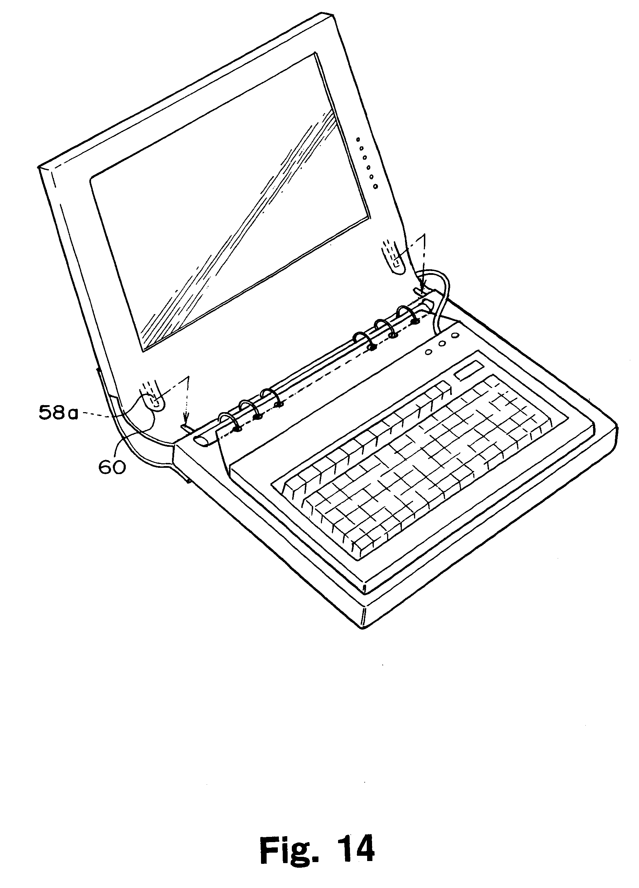

Fig. 13 shows the structure of a hinge part for constituting the display device setting mechanism of this embodiment. In Fig. 13, the leather is not shown for convenience' sake. Fig. 14 is used for explaining the method for setting the display device. The hinge member 58 is provided to the mounting plate 55 between the inner leather forming a part of the main body 40 and the rear member 56. The hinge member 58 comprises an U-shaped piece and a leg 58a extending from one end of the U-shaped piece. A mount side 58b to be screwed to the mounting plate 55 and a support side 58c of the U-shaped piece are coupled via a pivotable hinge 58d having a locking mechanism. The leg 58a is inserted into a holder hole 59 provided on the mounting plate 49 of the main device 43.

Referring to Fig. 10, the leather is not applied to the area in which the holder hole 59 is formed so as to permit the insertion of the leg 58a into the hole 59. On the other hand, part of the inner leather is cut open to form a window 60 through which the leg 58a provided between the leather and the rear member 56 is extended to be inserted in the holder hole 59.

Now the operation for setting the display at an optimal angle according to this embodiment will be described. First, the notebook organizer in the closed state as shown in Fig. 8 is opened by lifting the top cover including the display device 50, as shown in Fig. 14. When the opened top cover is slightly inclined forward, the leg 58a of the hinge member 58 provided inside the window 60 pushes open the window 60. The leg 58a now extending through the window 60 is then inserted into the holder hole 59 as indicated by an arrow in Fig. 14, and the display screen is fixedly held as shown in Fig. 9. The desired angle for setting the display screen is adjusted by moving the top cover back and forth when the leg 58a is inserted into the hole 59 and rotating the hinge 58d, which then supports the display device 50 when released (at a set angle).

As described, this embodiment provides a structure which fully considers the ease of connector connection and of maintenance, not a mere combination of an information data apparatus and a general notebook organizer. In particular, with regard to the maintenace of the apparatus, a module exchange, which has been impossible for general portable data terminals, can be made easily.

Further, in this embodiment, a keyboard which is formed into a leaf is used as an input device. However, if the input device is a pen, for example, it is possible to carry the pen along with other accessories or to provide a pen holder at an edge side of the notebook body.

In the foregoing embodiments, the binder type information data apparatus of this invention is applied to a portable filing system ("Filofax") which is one example of a binder. However, the present invention can be applied to a binder for filing loose leaves. In the foregoing embodiments, the notebook body used as an example has been regarded as one of binders, and the term "filing (binding) leaves" has been used for the item to be filed in the binder, although other names are also used such as "loose leaves" or, particularly in the case of a Filofax, as "refills" depending on the form of the binder body or on a manufacturer.

On the other hand, "a binder" includes not only the notebook organizer mentioned in the foregoing embodiments, but also "a file" depending on the shape of the binder body or on a manufacturer. Further, the binder may have means for holding binder leaves with filing holes other than the binding rings, e.g., a pipe fixed onto the binder body, or the binder may hold binding leaves with no filing holes, or the leaves may not be detachable.

While the preferred embodiments of the present invention have been described using specific terms, such description is for illustrative purposes only, and it is to be understood that changes and variations may be made without departing from the spirit or scope of the appended claims.

## Claims

1. A binder type information data terminal comprising:
an information data terminal including a main device in the form of a plate having a processor, a display device in the form of a plate having a display screen, and an input device for data input; and
a binder body constituting a binder,
said information data terminal having the appearance of a binder by housing said main device, said display device, and said input device, which have been prepared individually, in said binder body.

2. The binder type information data terminal as defined in claim 1, wherein at least one of said main device and said display device is provided on the end paper portion of said binder body so as to be integrally formed with a cover.

3. The binder type information data terminal as defined in claim 2, wherein a rear member forming the rear part of the binder is detachably fixed to at least one of the cover faces of the binder, and connection to terminals of said main device is allowed when the rear member is detached from said cover face and opened.

4. The binder type information data terminal as defined in claim 1, wherein, said input device is a keyboard formed as an input binder leaf having a leaf shape with filing holes and is filed in the binder body via filing rings.

5. The binder type information data terminal as defined in claim 1 further comprising a display device setting mechanism for setting the display screen of the display device at an optimal angle by angularly holding the opened cover.

6. The binder type information data terminal as defined in claim 5, wherein the display device setting mechanism further includes an adjusting mechanism for adjusting the set angle of the display device.

7. The binder type information data terminal as defined in claim 5, wherein the display device setting mechanism has a leg provided at the display device side on the cover to be opened when the apparatus is used and an aperture provided at the main device side which forms a base body when the apparatus is used, said leg being inserted into said aperture for holding said display device.

8. The binder type information data terminal as defined in claim 7, wherein a hinge is further provided for pivotably mounting said leg to said display device.

9. The binder type information data terminal as defined in claim 1 further comprising a binder leaf for containing accessories of said information data terminal.

10. The binder type information data terminal as defined in claim 1, wherein at least one of said main device and the input device is formed as a binder leaf having a leaf shape with filing holes and is filed in the binder body via filing rings.

11. The binder type information data terminal as defined in claim 1, wherein at least one of the main device and the display device is provided with a mounting member to be detachably mounted onto the end paper portion of said binder body.

12. The binder type information data terminal as defined in claim 11, wherein a substrate on which a processor or the like is mounted is removably housed in said main device.

13. The binder type information data terminal as defined in claim 11, wherein the rear member forming the rear part of the binder is detachably fixed to at least one of the cover faces of the binder, and connection to the terminals of said main device is allowed when the rear member is detached from said cover face and opened.
